# EUROPEAN PATENT SPECIFICATION

(11) **EP 2 461 047 B1**
(45) Date of publication and mention of the grant of the patent: **19.02.2014**
(21) Application number: 10425365.3
(22) Date of filing: 01.12.2010
(51) Int. Cl.: F16B 5/06, F16B 37/08, F16L 55/035, F16L 3/00

(54) **Fastening device for connecting at least one hose to a threaded stem**
Befestigungsvorrichtung zum Verbinden von mindestens einem Schlauch an einem Gewindezapfen
Dispositif de fixation permettant de connecter au moins un tuyau à une tige filetée

(43) Date of publication of application: 06.06.2012
(73) Proprietor: Fiat Group Automobiles S.p.A., 10135 Torino (TO) (IT); Illinois Tool Works, Inc., Glenview, IL 60026 (US)
(72) Inventor: Favata', Vincenzo, 10135 Torino (IT); Girodo, Franco, Hone (AO) (IT); Coccoz, Andrea, Hone (AO) (IT)
(74) Representative: Lovino, Paolo

(56) References cited:
- EP-A1- 0 886 093
- US-A- 5 170 984
- US-A- 6 036 145

## Description

The present invention relates to a fastening device for connecting at least one hose to a threaded stem.

To arrange the hoses in the engine compartment of a motor vehicle, straps are generally used to tie the hoses together and and/or clips that fasten the hoses to the body or to other fixed parts of the motor vehicle. In particular, known fastening devices connect the hoses to threaded stems that are welded to the bodywork. Such fastening devices are made of a single piece of thermoplastic material, for example polyamide, and comprise a central attachment portion fitted in a fixed position on the threaded stem and two side clamps that are fastened around the respective hoses. EP 0 886 093 A1 and US 6,036,145 disclose two known fastening devices.

Internally, the clamps are provided with projections, designed to come into contact with the external surface of the hoses. In use, such projections, under the effect of deformation, damp the vibrations transmitted between the bodywork of the motor vehicle and the hoses, thereby reducing the noise emitted. To improve damping of vibrations, the internal part of the clamps may be made of a softer material co-moulded onto a relatively rigid material, which is used to construct the attachment portion and the outside of the clamps.

Even with solutions in which a softer material is used on the inside of the clamps, noise damping efficiency and thus noise reduction are unsatisfactory. The main cause is that damping is concentrated only in the coupling zones between the hoses and the clamps.

The aim of the present invention is to provide a fastening device for connecting at least one hose to a threaded stem, which overcomes the problem described above in a simple and economic manner.

According to the present invention there is provided a fastening device for connecting at least one hose to a threaded stem, as defined in Claim 1.

In order to better understand the present invention, a non-limiting preferred embodiment thereof will now be described by way of example, with reference to the accompanying drawings in which:
- figure 1 is a side view of a preferred embodiment of the fastening device for connecting at least one hose to a threaded stem according to the present invention;
- figure 2 is a perspective view, with parts removed for the sake of clarity, of two components of the fastening device; and
- figure 3 is a cross-section showing a detail of the fastening device fitted on the threaded stem.

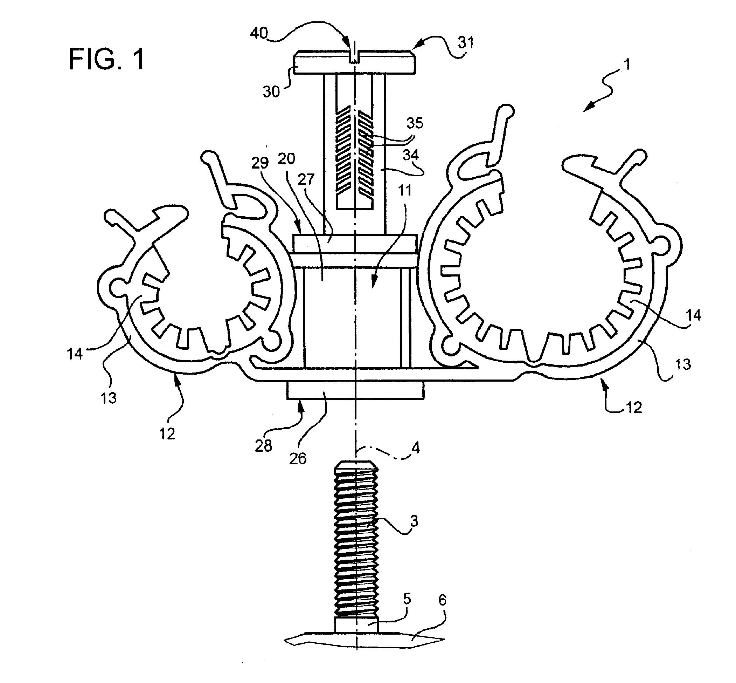

In figure 1, number 1 indicates a fastening device for fastening a pair of hoses (not shown) to a threaded stem 3 that extends along an axis 4, has one axial end 5 fastened to the bodywork 6 of a motor vehicle, for example by means of welding, and protrudes axially in relation to the bodywork 6.

The fastening device 1 comprises a supporting body 10, which is obtained by means of co-moulding of two plastic materials of different hardness and/or rigidity and comprises an attachment portion 11 that is arranged coaxially and around the threaded stem 3. The fastening device 1 further comprises two side clamps 12 which are diametrically opposite with respect to the attachment portion 11, are configured in such a way that they can be tightened around respective hoses and comprise respective relatively rigid peripheral portions 13 and respective relatively soft internal portions 14 that can be compressed against the external surface of the hoses. The clamps 12 are not described in further detail since these may differ, in terms of their number, geometrical characteristics, shape and method of closing, from those illustrated here by way of example.

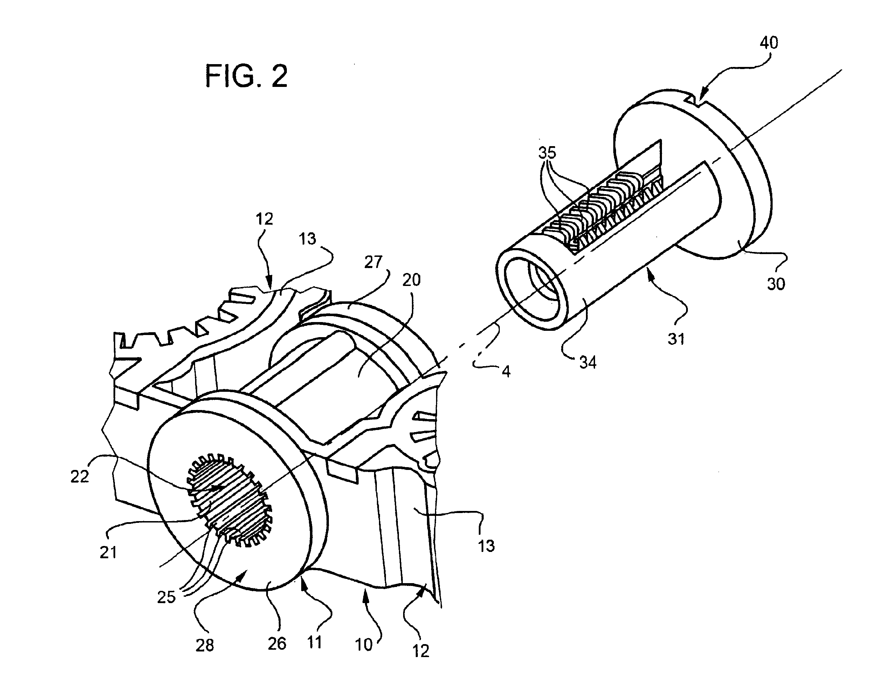

With reference to figure 2, the attachment portion 11 is essentially sleeve-shaped and comprises an external portion 20 and an internal portion 21, which are coaxial and substantially cylindrical. The external portion 20 is made of the same relatively rigid material as the peripheral portions 13, in particular of polyamide, so that the portions 20 and 13 define a support that furnishes the structural resistance necessary to maintain the hoses in the correct position in relation to the bodywork 6. The internal portion 21 delimits a cylindrical axial through hole 22 of larger size than the threaded stem 3 so as to be able to house the threaded stem 3 with radial clearance. Along the surface of the hole 22, the internal portion 21 comprises a series of radial projections 25 that are elastically deformable under compression and, in particular, are defined by ribs parallel to the axis 4.

The internal portion 21 axially ends with two flanges 26,27, arranged on opposite sides of the external portion 20 and having respective faces 28,29 which are at right angles to the axis 4 and define the axial ends of the attachment portion 11.

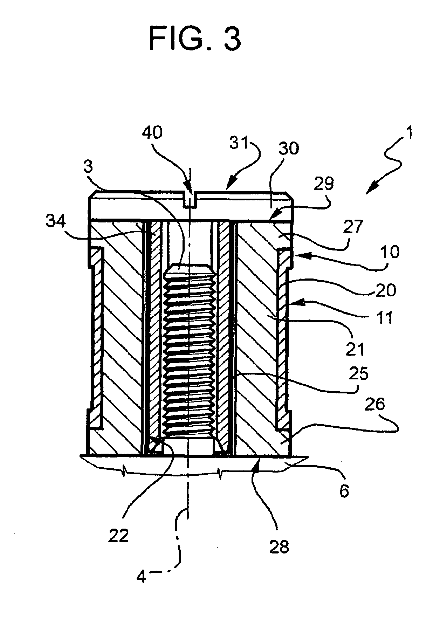

With reference to figure 3, the face 28 is arranged axially in contact with the bodywork 6, while the face 29 is arranged axially in contact with the head 30 of a fastening pin 31, which is made in a single piece of relatively rigid material, for example polyamide.

The fastening pin 31 is coaxial with the attachment portion 11 and with the threaded stem 3 and comprises a cylindrical stem 34, which is axially hollow and protrudes from the head 30 along the axis 4. The stem 34 is arranged radially between, and in contact with, the internal portion 21 and the threaded stem 3. In particular, the stem 34 has a plurality of teeth 35, which engage in the respective grooves of the thread of the threaded stem 3 when the fastening pin 31 is in the hole 22, so as to axially restrain the fastening pin 31. The outside diameter of the stem 34 is larger than the diameter of the hole 22, when it is out of the attachment portion 11. When it is inserted in the hole 22, the stem 34 comes into contact with the relatively soft material that defines the internal surface of the hole 22, so that it compresses such material elastically in a radial direction.

The body 10 remains in a fixed axial position due to the fact that it is axially blocked between the head 30 and the bodywork 6 and also due to the friction present between the surface of the hole 22 and the outer surface of the stem 34. Despite this friction, the body 10 can rotate in relation to the fastening pin 31.

To couple the fastening device 1 in the engine compartment of the motor vehicle, the body 10 is fitted axially around the threaded stem 3 until the face 28 comes into contact with the bodywork 6. Subsequently, the fastening pin is press fitted into the hole 22, between the threaded stem 3 and the projections 25 of the internal portion 21, until the head 30 comes into contact with the face 29. As mentioned above, the teeth 35 are oriented in such a way as to deform elastically and to engage in the various grooves of the thread of the threaded stem 3 during the axial insertion and so as to lock against the thread in the case of attempted axial loosening of the fastening pin 31. Therefore, on completion of forced insertion, the thread restrains the teeth 35 in an axial direction and prevents axial loosening of the fastening pin 31 in order to keep the fastening device 1 in place. To uncouple the fastening pin 31 and, thus, to release the body 10, the fastening pin 31 must be turned using a screwdriver. With regard to this aspect, the head 30 has a seat 40, for example a notch, of a suitable shape to be engaged by a corresponding tip of the screwdriver. During rotation, the teeth 35 follow the helical profile of the thread without jamming. Therefore, the stem 34 is extracted gradually from the hole 22.

The softer plastic material extends continuously in order to define the internal portion 21 and the flanges 26,27. Said material is also less rigid and less hard than the material of the fastening pin 31. The material of the internal portion 21 and of the flanges 26,27, for example, is thermoplastic rubber with, in particular, a hardness of approx. 50 shore A.

Using this softer material between the fastening pin 31 and the clamps 12, in use the vibrations are also damped in the coupling zones between the threaded stem 3 and the attachment portion 11 of the body 10, and not only in the coupling zones between the clamps 12 and the respective hoses. In this way, the vibrations and, thus, the noise are damped more effectively compared with other known solutions.

During assembly, the flanges 26,27, as they deform, ensure that the attachment portion 10 remains blocked between the head 30 and the bodywork 6, without any possibility of axial movement. Moreover, they also damp the vibrations along the axis 4 between the body 10 and the bodywork 6.

Other advantages will be apparent from the description of the above characteristics.

Lastly, it is clear that modifications and variations may be made to the fastening device 1 described and illustrated herein without departing from the scope of protection of the present invention, as defined in the attached claims.

In particular, the quantity and distribution of the softer material in the internal portion 21 and in particular along the inner surface of the hole 22 could differ from those illustrated by way of example; and/or the fastening pin 31 could be of a different shape and/or the retention system could be other than the teeth 35.

## Claims

1. Fastening device (1) for connecting at least one hose to a threaded stem (3); the fastening device comprising a supporting body (10) having:
- an attachment portion (11) comprising an external portion (20) and an internal portion (21), which defines a through hole (22) extending along the axis (4) and is coaxial with said external portion (20);
- at least one side clamp (12) configured in such a way
as to be tightened around said hose;
at least part of said internal portion (21) being made of a material that is less hard and/or less rigid than the material of said external portion (20) and defining the surface of said through hole (22); the fastening device further comprising a fastening pin (31) that is movable between an extracted position and an inserted position in relation to said through hole (22); said fastening pin (31) having an axial stem (34), which is axially hollow, is suitable for coupling with said threaded stem (3) and, in said inserted position, is in contact with the surface of said through hole (22); said axial stem (34) having an outside diameter that is larger than the inside diameter of the surface of said through hole (22), when said fastening pin (31) is arranged in said extracted position;
**characterised in that** said internal portion (21) comprises a plurality of radial projections (25) defining the surface of said through hole (22).

2. Fastening device according to Claim 1, **characterized in that** said radial projections (25) are defined by ribs parallel to said axis (4).

3. Fastening device according to Claim 1 or 2, **characterized in that** said fastening pin (31) is made of a material that is harder and/or more rigid than the material of said internal portion (21).

4. Fastening device according to any one of the previous Claims, **characterized in that** said axial stem (34) comprises retaining means (35) suitable to cooperate with the thread of said threaded stem (3) to prevent the axial loosening of said fastening pin (31) in relation to said threaded stem (3).

5. Fastening device according to Claim 4, **characterized in that** said retaining means (35) comprise at least one tooth that is oriented in such a way as to deform elastically during the axial insertion of said fastening pin (31) and in such a way as to engage against said thread in the case of axial loosening of said fastening pin (31).

6. Fastening device according to any one of the previous Claims, **characterized in that** said fastening pin (31) comprises a head (30) which, in said inserted position, is arranged in axial contact with said attachment portion (11).

7. Fastening device according to Claim 6, **characterized in that** said attachment portion (11) comprises at least one axial end (26,27) made of a material that is less hard and/or less rigid than the material of said external portion (20).

8. Fastening device according to Claim 7, **characterized in that** said less hard and/or less rigid material extends continuously to define the axial ends (26,27) and the internal portion (21) of said attachment portion (11).

9. Fastening device according to any one of the Claims from 6 to 8, **characterized in that** said head (30) has a seat (40) configured in such a way as to be engaged by a corresponding tip of a screwdriver.

10. Fastening device according to any one of the previous Claims, **characterized in that** said less hard and/or less rigid material has a hardness of approx. 50 shore A.

11. Fastening device according to any one of the previous Claims, **characterized in that** said less hard and/or less rigid material is thermoplastic rubber.

## Patentansprüche

1. Befestigungsvorrichtung (1) zum Verbinden von mindestens einem Schlauch mit einem Gewindeschaft (3); wobei die Befestigungsvorrichtung einen Tragkörper (10) umfasst, der aufweist:
- einen Befestigungsabschnitt (11), der einen äußeren Abschnitt (20) und einen inneren Abschnitt (21), der ein Durchgangsloch (22) definiert, das sich entlang der Achse (4) erstreckt und mit dem äußeren Abschnitt (20) koaxial ist, umfasst;
- mindestens eine seitliche Klammer (12), die derart ausgebildet ist,
dass sie um den Schlauch festgeklemmt wird;
wobei mindestens ein Teil des inneren Abschnitts (21) aus einem Material hergestellt ist, das weniger hart und/oder weniger steif als das Material des äußeren Abschnitts (20) ist und die Oberfläche des Durchgangsloches (22) definiert; wobei die Befestigungsvorrichtung ferner einen Befestigungsstift (31) umfasst, der zwischen einer in Bezug auf das Durchgangsloch (22) herausgezogenen Stellung und einer eingeführten Stellung beweglich ist; wobei der Befestigungsstift (31) einen axialen Schaft (34) aufweist, der axial hohl ist, zum Verbinden mit dem Gewindeschaft (3) geeignet ist und in der eingeführten Stellung mit der Oberfläche des Durchgangsloches (22) in Kontakt steht; wobei der axiale Schaft (34) einen Außendurchmesser aufweist, der größer als der Innendurchmesser der Oberfläche des Durchgangsloches (22) ist, wenn der Befestigungsstift (31) in der herausgezogenen Stellung angeordnet ist;
**dadurch gekennzeichnet, dass** der innere Abschnitt (21) eine Vielzahl von radialen Vorsprüngen (25) umfasst, welche die Oberfläche des Durchgangsloches (22) definieren.

2. Befestigungsvorrichtung nach Anspruch 1, **dadurch gekennzeichnet, dass** die radialen Vorsprünge (25) durch parallel zu der Achse (4) verlaufende Rippen definiert sind.

3. Befestigungsvorrichtung nach Anspruch 1 oder 2, **dadurch gekennzeichnet, dass** der Befestigungsstift (31) aus einem Material hergestellt ist, welches härter und/oder steifer als das Material des inneren Abschnitts (21) ist.

4. Befestigungsvorrichtung nach einem beliebigen der vorhergehenden Ansprüche, **dadurch gekennzeichnet, dass** der axiale Schaft (34) Haltemittel (35) umfasst, die sich dazu eignen, mit dem Gewinde des Gewindeschafts (3) zusammenzuwirken, um das axiale Lösen des Befestigungsstiftes (31) in Bezug auf den Gewindeschaft (3) zu verhindern.

5. Befestigungsvorrichtung nach Anspruch 4, **dadurch gekennzeichnet, dass** die Haltemittel (35) mindestens einen Zahn umfassen, welcher derart ausgerichtet ist, dass er sich während des axialen Einführens des Befestigungsstiftes (31) elastisch verformt, und derart ausgerichtet ist, dass er im Falle des axialen Lösens des Befestigungsstiftes (31) an dem Gewinde in Eingriff steht.

6. Befestigungsvorrichtung nach einem beliebigen der vorhergehenden Ansprüche, **dadurch gekennzeichnet, dass** der Befestigungsstift (31) einen Kopf (30) umfasst, welcher in der eingeführten Stellung in axialem Kontakt mit dem Befestigungsabschnitt (11) angeordnet ist.

7. Befestigungsvorrichtung nach Anspruch 6, **dadurch gekennzeichnet, dass** der Befestigungsabschnitt (11) mindestens ein axiales Ende (26, 27) umfasst, welches aus einem Material hergestellt ist, das weniger hart und/oder weniger steif als das Material des äußeren Abschnitts (20) ist.

8. Befestigungsvorrichtung nach Anspruch 7, **dadurch gekennzeichnet, dass** sich das weniger harte und/oder weniger steife Material durchgehend erstreckt, um die axialen Enden (26, 27) und den inneren Abschnitt (21) des Befestigungsabschnitts (11) zu definieren.

9. Befestigungsvorrichtung nach einem beliebigen der Ansprüche 6 bis 8, **dadurch gekennzeichnet, dass** der Kopf (30) einen Schlitz (40) aufweist, welcher derart ausgebildet ist, dass eine entsprechende Spitze eines Schraubendrehers mit diesem in Eingriff gelangt.

10. Befestigungsvorrichtung nach einem beliebigen der vorhergehenden Ansprüche, **dadurch gekennzeichnet, dass** das weniger harte und/oder weniger steife Material eine Härte von etwa 50 Shore A aufweist.

11. Befestigungsvorrichtung nach einem beliebigen der vorhergehenden Ansprüche, **dadurch gekennzeichnet, dass** das weniger harte und/oder weniger steife Material thermoplastischer Gummi ist.

## Revendications

1. Dispositif de fixation (1) pour raccorder au moins un tuyau à une tige filetée (3) ; le dispositif de fixation comprenant un corps de support (10) ayant :
une partie de fixation (11) comprenant une partie externe (20) et une partie interne (21) qui définit un trou de passage (22) s'étendant le long de l'axe (4) et est coaxiale avec ladite partie externe (20) ;
au moins un dispositif de serrage latéral (12) configuré afin d'être serré autour dudit tuyau ;
au moins une partie de ladite partie interne (21) étant réalisée avec un matériau qui est moins dur et/ou moins rigide que le matériau de ladite partie externe (20) et définissant la surface dudit trou de passage (22) ; le dispositif de fixation comprenant en outre une broche de fixation (31) qui est mobile entre une position extraite et une position insérée par rapport audit trou de passage (22) ; ladite broche de fixation (31) ayant une tige axiale (34) qui est axialement creuse, est appropriée pour le couplage avec ladite tige filetée (3) et, dans ladite position insérée, est en contact avec la surface dudit trou de passage (22) ; ladite tige axiale (34) ayant un diamètre externe qui est plus grand que le diamètre interne de la surface dudit trou de passage (22), lorsque ladite broche de fixation (31) est agencée dans ladite position extraite ;
**caractérisé en ce que** ladite partie interne (21) comprend une pluralité de saillies radiales (25) définissant la surface dudit trou de passage (22).

2. Dispositif de fixation selon la revendication 1, **caractérisé en ce que** lesdites saillies radiales (25) sont définies par des nervures parallèles audit axe (4).

3. Dispositif de fixation selon la revendication 1 ou 2, **caractérisé en ce que** ladite broche de fixation (31) est réalisée avec un matériau qui est plus dur et/ou plus rigide que le matériau de ladite partie interne (21).

4. Dispositif de fixation selon l'une quelconque des revendications précédentes, **caractérisé en ce que** ladite tige axiale (34) comprend des moyens de retenue (35) appropriés pour coopérer avec le filetage de ladite tige filetée (3) pour empêcher le desserrage axial de ladite broche de fixation (31) par rapport à ladite tige filetée (3).

5. Dispositif de fixation selon la revendication 4, **caractérisé en ce que** lesdits moyens de retenue (35) comprennent au moins une dent qui est orientée afin de se déformer élastiquement pendant l'insertion axiale de ladite broche de fixation (31) et afin de se mettre en prise contre ledit filetage dans le cas du desserrage axial de ladite broche de fixation (31).

6. Dispositif de fixation selon l'une quelconque des revendications précédentes, **caractérisé en ce que** ladite broche de fixation (31) comprend une tête (30) qui, dans ladite position insérée, est agencée en contact axial avec ladite partie de fixation (11).

7. Dispositif de fixation selon la revendication 6, **caractérisé en ce que** ladite partie de fixation (11) comprend au moins une extrémité axiale (26, 27) réalisée avec un matériau qui est moins dur et/ou moins rigide que le matériau de ladite partie externe (20).

8. Dispositif de fixation selon la revendication 7, **caractérisé en ce que** ledit matériau moins dur et/ou moins rigide s'étend de manière continue pour définir les extrémités axiales (26, 27) et la partie interne (21) de ladite partie de fixation (11).

9. Dispositif de fixation selon l'une quelconque des revendications 6 à 8, **caractérisé en ce que** ladite tête (30) a un siège (40) configuré afin d'être mis en prise par une pointe correspondante d'un tournevis.

10. Dispositif de fixation selon l'une quelconque des revendications précédentes, **caractérisé en ce que** ledit matériau moins dur et/ou moins rigide a une dureté approximativement 50 Shore A.

11. Dispositif de fixation selon l'une quelconque des revendications précédentes, **caractérisé en ce que** ledit matériau moins dur et/ou moins rigide est du caoutchouc thermoplastique.
